(19) **Europäisches Patentamt / European Patent Office / Office européen des brevets**

(11) **EP 4 116 350 A1**

(12) # EUROPEAN PATENT APPLICATION

(43) Date of publication:
**11.01.2023 Bulletin 2023/02**

(21) Application number: **21184256.2**

(22) Date of filing: **07.07.2021**

(51) International Patent Classification (IPC):
*C08G 18/42* (2006.01)      *B33Y 10/00* (2015.01)
*C08G 18/48* (2006.01)      *C08K 3/22* (2006.01)
*C08L 75/04* (2006.01)      *C08G 18/22* (2006.01)
*B33Y 70/10* (2020.01)      *B29C 64/10* (2017.01)
*C08K 3/32* (2006.01)      *A01K 11/00* (2006.01)
*C08K 3/105* (2018.01)

(52) Cooperative Patent Classification (CPC):
(C-Sets available)
**C08G 18/42; B29C 64/106; B29C 64/153;
B29C 64/268; B33Y 10/00; B33Y 70/10;
C08G 18/222; C08G 18/48; C08K 3/32;
C08L 75/04; A01K 11/001; C08K 3/105;**
C08K 2003/321; C08K 2201/019      (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Covestro Deutschland AG
51373 Leverkusen (DE)**

(72) Inventor: **The designation of the inventor has not yet been filed**

(74) Representative: **Davepon, Björn
Patentanwaltskanzlei Davepon
Schloss Dyck
41363 Jüchen (DE)**

(54) **TPU WITH COPPER AS IR ABSORBER AND 3D PRINTING PROCESS EMPLOYING A COPPER-CONTAINING THERMOPLASTIC POLYMER**

(57)      A thermoplastic polyurethane comprises a copper compound, wherein copper is present in the polyurethane in an amount of $\geq 10$ ppm to $\leq 1500$ ppm, based on the total weight of the polyurethane, the polyurethane is free from antimony and the polyurethane is free from bismuth, with the exception of bismuth originating from bismuth carboxylates. In an additive manufacturing process comprising fusing layers of a thermoplastic polymer build material by irradiating the polymer with a laser according to pre-determined crosssections of an article, the laser emits a light with a wavelength of $> 1060$ nm to $\leq 1070$ nm and in the polymer copper is present in the polymer in an amount of $\geq 10$ ppm to $\leq 10000$ ppm, based on the total weight of the polymer.

FIG. 7

EP 4 116 350 A1

(52) Cooperative Patent Classification (CPC): (Cont.)

C-Sets
**C08K 3/32, C08L 75/04**

**Description**

The present invention concerns a copper-containing thermoplastic polyurethane (TPU) and an additive manufacturing process employing a copper-containing thermoplastic polymer as a build material.

The labeling of livestock with thermoplastic polyurethane ear marks or tags is widely practiced. Identifying information can be inscribed into the TPU by charring with a laser. For example, WO 2011/083100 A1 discloses a transparent polyurethane which can be written on by means of high-energy radiation and which contains a bismuth oxide as a contrast medium. The bismuth oxide has an average grain size of <1.5 $\mu$m. Preferably this polyurethane is a TPU.

WO 2018/150033 A1 relates to a laser-markable plastic comprising a thermoplastic polymer, bismuth oxide and a co-absorbing additive selected from the group consisting of plateletshaped silicates and inorganic copper-, cobalt-, aluminum or iron-containing pigments, wherein the amount of the co-absorbing additive relative to the bismuth oxide is from 2 to 80 wt.-%. The experimental section discloses the use of a copper hydroxy phosphate with the trademark name Fabulase® 361 as a co-absorbing additive.

US 2008/004363 A1 discloses laser-weldable polymers which consist of a laser-transparent part and a laser-absorbent part and can be welded to one another by means of laser light and are distinguished by the fact that the laser-absorbent part comprises, as absorber, copper hydroxide phosphate and/or copper phosphate. According to a dependent claim the polymer can be a thermoplastic polyurethane. This published patent application states that the absorber is preferably added to the laser-transparent polymer part in amounts of 0.001-2% by weight, in particular 0.01-1% by weight and very particularly preferably 0.05-0.5% by weight, based on the polymer part.

US 5,630,979 is directed towards a process for the inscription of moldings based on thermoplastic polyurethane elastomers or mixtures of thermoplastic polyurethane elastomers with up to 45% by weight based on the total weight of polymers, of further thermoplastics, by means of high-energy radiation, wherein the additives employed to improve the inscribability include a copper phosphate and an inorganic phyllosilicate. The amount of copper phosphate is stated to not be subject to any particular limitation but to be generally in the range from 0.02 to 5% by weight, preferably from 0.05 to 0.5% by weight, in particular from 0.05 to 0.18% by weight, based on the total weight of polymer.

Selective laser sintering (SLS) and fused deposition modeling (FDM, also FFF) processes are established additive manufacturing ("3D printing") methods. Thermoplastic polyurethanes have also been reported as build materials, for example in US 2017/129177 A1 (use of thermoplastic polyurethane powders in powder-based additive manufacturing methods for the production of elastic articles). WO 2015/109141 A1 relates to systems and methods for solid freeform fabrication, especially fused deposition modeling, as well as various articles made using the same, where the systems and methods utilize certain thermoplastic polyurethanes which are said to be particularly suited for such processing.

In additive manufacturing a transition to lasers of the Nd:YAG type which provide laser light at a nominal wavelength of 1064 nm is observed. Then different IR absorbers than customary borides, carbon black and the like are needed in the build material. The present invention has the object of providing a TPU build material suitable for this laser type and an additive manufacturing method employing such a TPU.

This object is achieved by a TPU according to claim 1 and a method according to claim 6. The use of such a TPU as a build material is the subject of claim 15. Advantageous embodiments are the subject of the dependent claims. They may be combined freely unless the context clearly indicates otherwise.

In a thermoplastic polyurethane comprising a copper compound, copper is present in the polyurethane in an amount of $\geq$ 10 ppm to $\leq$ 1500 ppm, based on the total weight of the polyurethane, the polyurethane is free from antimony and the polyurethane is free from bismuth, with the exception of bismuth originating from bismuth carboxylates.

In an additive manufacturing process comprising fusing layers of a thermoplastic polymer build material by irradiating the polymer with a laser according to pre-determined crosssections of an article, the laser emits a light with a wavelength of $\geq$ 1060 nm to $\leq$ 1070 nm and in the polymer copper is present in the polyurethane in an amount of $\geq$ 10 ppm (preferably $\geq$ 40 ppm) to $\leq$ 10000 ppm (preferably $\leq$ 5000 ppm, more preferred $\leq$ 1500 ppm, most preferred $\leq$ 500), based on the total weight of the polymer.

Examples for suitable polymers in the additive manufacturing process include polyolefins such as PP, polyamides such as PA 6,6, PA 6,66, PA 12 and PA 12,12 as well as polyesters such as PBT. Preferably, according to one embodiment of the process, the polymer is a polyurethane.

It has surprisingly been found that thermoplastic polymers, especially TPUs, with such amounts of copper IR absorber can be used as build materials in $CO_2$, Nd:YAG or ytterbium (fiber) laser-assisted additive manufacturing processes without the (intended) discoloration customary in the cow ear tag marking technology. In particular, bismuth oxides are excluded from the TPU according to the invention.

It is understood that the stated amounts of metals relate to metal atoms or ions, i.e. without accompanying ligands or the like of metal compounds.

The absence of antimony is an added benefit from an environmental and recyclability standpoint.

In the context of the present invention the term "free from" is meant to include technically unavoidable impurities but exclude the deliberate addition of Sb and Bi compounds. For example, "free from" can be understood as less than 1 ppm Sb and less than 1 ppm Bi, based on the total weight of the polyurethane. The Cu, Sb and Bi contents can be determined by atomic absorption spectroscopy (AAS), if so desired. In practice a (TPU) formulator will be able to calculate the Cu contents from the recipe for the (TPU) formulation.

An exception is made for bismuth originating from bismuth carboxylates. Such carboxylates can be used as urethane catalysts and may be present; they are not active as IR absorbers.

The TPU or the polymer in the instance of the process according to the invention may also be free from inorganic phyllosilicates such as mica in order to provide a transparent or translucent 3D printed article. If so desired, the TPU or thermoplastic polymer in general may be colored by the addition of dyestuffs, for example.

In an embodiment of the polyurethane or the process the copper is present in the TPU or polymer, respectively, in an amount of $\geq 40$ ppm to $\leq 500$ ppm. Preferred are amounts of $\geq 50$ ppm to $\leq 250$ ppm.

In another embodiment of the polyurethane or the process the copper is present as copper(II) hydroxide phosphate. Particular preference is given to a compound having the empirical chemical formula $Cu_3(PO_4)_2 \cdot Cu(OH)_2$, the mineral of which is known as libethenite.

In another embodiment of the polyurethane it is in the form of a powder having an average powder size ($d_{50}$) of $\leq 200$ $\mu$m or in the form of a filament having a diameter of $\leq 5$ mm. More preferred are average powder sizes ($d_{50}$) of $\leq 150$ $\mu$m and filament diameters of $\leq 3$ mm.

In another embodiment of the polyurethane or the process the polyurethane or thermoplastic polymer, respectively, is an aromatic polyesterpolyol-polyetherpolyol polyurethane, an aliphatic polyesterpolyol-polyetherpolyol polyurethane or an aromatic polyesterpolyol polyurethane. In general, TPUs suitable for the present invention can be synthesized by reacting a) at least one organic diisocyanate with b) at least one compound having groups which are reactive toward isocyanate groups and a number average molecular weight (Mn) of from 500 g/mol to 6000 g/mol and a number average functionality of the totality of the components under b) of from 1.8 to 2.5 and with c) at least one chain extender having a number average molecular weight ($M_n$) of from 60 to 450 g/mol and a number average functionality of the totality of the chain extenders under c) of from 1.8 to 2.5.

Preference is given to using hexamethylene 1,6-diisocyanate, cyclohexane 1,4-diisocyanate, isophorone diisocyanate, dicyclohexylmethane diisocyanate, diphenylmethane diisocyanate isomer mixtures having a diphenylmethane 4,4'-diisocyanate content of more than 96% by weight and in particular diphenylmethane 4,4'-diisocyanate and naphthylene 1,5-diisocyanate.

As relatively long-chain isocyanate-reactive compounds under b), mention may be made by way of example of ones having an average of from at least 1.8 to 3.0 Zerewitinoff-active hydrogen atoms and a number average molecular weight of from 500 to 10 000 g/mol. These include compounds bearing not only amino groups but also thiol groups or carboxyl groups, in particular compounds having from two to three, preferably two, hydroxyl groups, especially those having number average molecular weights $M_n$ of from 500 to 6000 g/mol, particularly preferably those having a number average molecular weight $M_n$ of from 600 to 4000 g/mol, e.g. hydroxyl-containing polyester polyols, polyether polyols, polycarbonate polyols and polyester polyamides.

With respect to chain extenders c), preference is given to using aliphatic diols having from 2 to 14 carbon atoms, e.g. ethanediol, 1,2-propanediol, 1,3-propanediol, 1,4-butanediol, 2,3-butanediol, 1,5-pentanediol, 1,6-hexanediol, diethylene glycol and dipropylene glycol.

The relative amounts of isocyanate groups and groups which are reactive toward isocyanate are preferably selected so that the ratio is from 0.9:1 to 1.2:1, preferably from 0.95:1 to 1.1:1.

In another embodiment of the process the process is a selective laser powder sintering process.

In another embodiment of the process the process is a fused deposition modeling process. The laser can assist in the deposition of the molten material from the print head by irradiating the surface of the polymer layer onto which the molten material is to be deposited.

In another embodiment of the process the laser is operated at a power of $\leq 501$ W. Preferred is a power of $\leq 250$ W.

In another embodiment of the process the energy density of the laser, expressed as J/mm$^3$, is $\geq 95\%$ (preferably $\geq 95\%$ to $\leq 400\%$, more preferred $\geq 95\%$ to $\leq 300\%$, even more preferred $\geq 95\%$ to $\leq 200\%$, most preferred $\geq 95\%$ to $\geq 105\%$) of the value calculated by the formula $0.606x^{-0.785}$ with x being the copper content in the polymer, expressed as weight-percentage based on the total weight of the polymer.

In another embodiment of the process the polymer is free from antimony and the polymer is free from bismuth, with the exception of bismuth originating from bismuth carboxylates. The exception is made for bismuth originating from bismuth carboxylates as such carboxylates can be used as urethane catalysts and may be present in the TPU and they are not active as IR absorbers.

The polymer, in particular if it is a TPU, may also be free from inorganic phyllosilicates such as mica in order to provide a transparent or translucent 3D printed article. If so desired, the polymer may be colored by the addition of dyestuffs, for example.

Another aspect of the invention is the use of a thermoplastic polymer, preferably a polyurethane, comprising a copper compound as a build material in an additive manufacturing process. Copper is present in the polymer in an amount of ≥ 10 ppm (preferably ≥ 40 ppm) to ≤ 10000 ppm (preferably ≤ 5000 ppm, more preferred ≤ 1500 ppm, most preferred ≤ 500), based on the total weight of the polyurethane, the polymer is free from antimony and the polymer is free from bismuth, with the exception of bismuth originating from bismuth carboxylates.

Preferably the polymer is in the form of a powder having an average powder size ($d_{50}$) of ≤ 200 μm or in the form of a filament having a diameter of ≤ 5 mm. More preferred are average powder sizes ($d_{50}$) of ≤ 150 μm and filament diameters of ≤ 3 mm.

The present invention will be further described with reference to the following examples and figures without wishing to be limited by them.

Experiments using 50 ppm of copper

The first TPU (TPU-1) was an aromatic extrusion- and injection molding grade polyesterpolyol-polyetherpolyol polyurethane having a Shore A hardness of ca. 77. The masterbatch was a masterbatch based on a universal polymer carrier containing 40 weight-% of copper(II) hydroxide phosphate-IR absorber. Compounded TPU-1 was obtained by compounding TPU-1 and the masterbatch to yield a product with 50 ppm (weight/weight) of copper. No bismuth compounds were present in the TPU or the masterbatch.

Powder 1-1 was produced by cryogrinding the uncompounded TPU-1 to an average particle size ($d_{50}$) of 137 μm. Powder 1-2 was produced by cryogrinding the compounded TPU-1 to an average particle size ($d_{50}$) of 130 μm.

To test the effect of the formulation of powder 1-2 in comparison to the pure TPU powder 1-1 for laser sintering applications, both powders were each knife coated onto a glass plate (layer height = 3000 μm) and applied to a laser system.

For the experiments a laser device with a pulsed Nd:YAG (1064 nm, 12 W) laser source was used (manufacturer: ACI Laser GmbH, Germany; type: DPL Nexus Marker) and operated by applying a constant average laser power output of 12 W and other fixed properties shown in Table 1.

Table 1: Fixed parameters of test setup

| Parameter | Unit | Value |
|---|---|---|
| Laser power | W | 12 |
| Pulse duration | ns | 30 |
| Hatch distance | mm | 0.3 |
| Diameter of laser spot | μm | 35 |

In order to evaluate the enhanced sintering properties of powder 1-1 vs. powder 1-2, the glass plates with the powder layers were exposed to different laser intensities, controlled by adjusting both laser pulse frequency and laser speed as shown in Table 2.

Table 2: Variable parameters of test setup, resulting laser power of pulse

| Pulse frequency [Hz] | Dots per inch | | | | | | | Power density of pulse [W/m²] | Power of pulse [W] |
|---|---|---|---|---|---|---|---|---|---|
| 6300 | 8001 | 6001 | 4801 | 4000 | 3429 | 3000 | 2667 | 6.6E+13 | 63492 |
| 5467 | 6943 | 5207 | 4166 | 3471 | 2975 | 2603 | 2314 | 7,6E+13 | 73171 |
| 4633 | 5884 | 4413 | 3531 | 2942 | 2522 | 2207 | 1961 | 9,0E+13 | 86331 |
| 3800 | 4826 | 3620 | 2896 | 2413 | 2068 | 1810 | 1609 | 1.1E+14 | 105263 |
| 2967 | 3768 | 2826 | 2261 | 1884 | 1615 | 1413 | 1256 | 1.4E+14 | 134831 |
| 2133 | 2709 | 2032 | 1626 | 1355 | 1161 | 1016 | 903 | 1.9E+14 | 187500 |
| 1300 | 1651 | 1238 | 991 | 826 | 708 | 619 | 550 | 3.2E+14 | 307692 |
| | 20 | 27 | 33 | 40 | 47 | 53 | 60 | | |
| Laser speed [mm/s] | | | | | | | | | |

The process settings were applied by shaping a 7 x 7-matrix pattern of equally sized square fields. The overall size of the matrix pattern was 30 mm x 30 mm Each square of the matrix pattern was shaped by applying the settings described in Table 1 for each pair out of laser speed and pulse frequency, respectively.

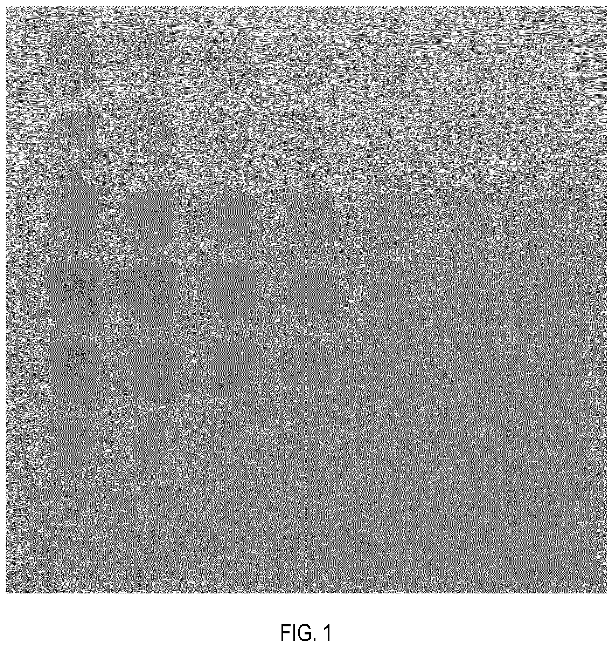

The experiment with powder 1-1 showed no visible sintering at all. Results of the experiment with powder 1-2 are depicted in FIG. 1. Results consistent with the requirements for 3D printing via laser sintering were defined as uniformly sintered, transparent or translucent, not discolored material with sharp edges of the squares that the laser source had melted into the powder layer. These are indicated as underlined in Table 2.

Experiments using higher amounts of copper

The second TPU (TPU-2) used was an aliphatic calandering grade polyesterpolyol-polyetherpolyol polyurethane having a Shore A hardness of ca. 86A. The third TPU (TPU-3) used was an aromatic coating grade polyesterpolyol polyurethane having a Shore A hardness of ca. 93A. The masterbatch was a masterbatch based on a universal polymer carrier containing 40 weight-% of copper(II) hydroxide phosphate-IR absorber. Compounded TPUs were obtained by compounding the masterbatch and both the TPU-2 and TPU-3, respectively, to yield products with different amounts of copper as stated in table 3. No bismuth compounds were present in the TPU or the masterbatch.

Table 3: Investigated material variants

| Compound | Powder | Cu amount [weight-%] |
|---|---|---|
| TPU 2-1 | Powder 2-1 | 0.5 |
| TPU 2-2 | Powder 2-2 | 0.1 |
| TPU 2-3 | Powder 2-3 | 0.01 |
| TPU 3-1 | Powder 3-1 | 0.1 |
| TPU 3-2 | Powder 3-2 | 0.02 |

Powders 2-1, 2-2 and 2-3 were produced by cryogrinding the compounded TPUs 2-1, 2-2 and 2-3 to an average particle size ($d_{50}$) of 80, 75 and 80 $\mu$m, respectively. Powders 3-1 and 3-2 were produced by cryogrinding the compounded TPUs 3-1 and 3-2 to an average particle size ($d_{50}$) of 78 and 74 $\mu$m, respectively.

To test the effect of the different Cu concentrations shown in table 3 within powders 2-x and 3-x for laser sintering applications, all powders were each knife coated onto a glass plate (layer height = 3 mm) and applied to a laser system.

For the experiments a laser device with a Nd:YAG (1064 nm, 12 W max.) laser source was used (manufacturer: ACI Laser GmbH. Germany; type: DPL Nexus Marker) and operated by applying a pulsed laser beam characterized by fixed properties shown in table 4.

Table 4: Fixed parameters of test setup

| Parameter | Unit | Value |
|---|---|---|
| Pulse frequency | Hz | 100000 |
| Pulse duration | ns | 30 |
| Hatch distance | mm | 0.3 |
| Diameter of laser spot | $\mu$m | 35 |

In order to evaluate the enhanced sintering properties of all previously described powders, the glass plates with the powder layers were exposed to different laser intensities, controlled by adjusting both laser power and laser scanning speed as shown in tables 5 to 9.

Results consistent with the requirements for 3D printing via laser sintering were defined as uniformly sintered, transparent or translucent, not discolored material with sharp edges of the squares that the laser source had melted into the powder layer. These are indicated as underlined in the following tables 5 to 9.

Table 5: Powder 2-1 - Variable parameters of test setup, resulting average laser energy density and laser power of pulse

| Rel. laser power, 100% := 12 W [%] | Average laser energy density [J/mm³] | | | | | | | | | Power of pulse [W] |
|---|---|---|---|---|---|---|---|---|---|---|
| 100 | 3.6 | 2.9 | 2.4 | 2.1 | 1.8 | 1.6 | 1.5 | 1.3 | 1.2 | 4000 |
| 95 | 3.5 | 2.8 | 2.3 | 2.0 | 1.7 | 1.5 | 1.4 | 1.3 | 1.2 | 3800 |
| 90 | 3.3 | 2.6 | 2.2 | 1.9 | 1.6 | 1.5 | 1.3 | 1.2 | 1.1 | 3600 |
| 85 | 3.1 | 2.5 | 2.1 | 1.8 | 1.5 | 1.4 | 1.2 | 1.1 | 1.0 | 3400 |
| 80 | 2.9 | 2.3 | 1.9 | 1.7 | 1.5 | 1.3 | 1.2 | 1.1 | 1.0 | 3200 |
| 75 | 2.7 | 2.2 | 1.8 | 1.6 | 1.4 | 1.2 | 1.1 | 1.0 | 0.9 | 3000 |
| 70 | 2.5 | 2.0 | 1.7 | 1.5 | 1.3 | 1.1 | 1.0 | 0.9 | 0.8 | 2800 |
| 65 | 2.4 | 1.9 | 1.6 | 1.4 | 1.2 | 1.1 | 0.9 | 0.9 | 0.8 | 2600 |
| 60 | 2.2 | 1.7 | 1.5 | 1.2 | 1.1 | 1.0 | 0.9 | 0.8 | 0.7 | 2400 |
| | 1000 | 1250 | 1500 | 1750 | 2000 | 2250 | 2500 | 2750 | 3000 | |
| | Laser speed [mm/s] | | | | | | | | | |

Table 6: Powder 2-2 - Variable parameters of test setup, resulting average laser energy density and laser power of pulse

| Rel. laser power, 100% := 12 W [%] | Average laser energy density [J/mm³] | | | | | | | Power of pulse [W] |
|---|---|---|---|---|---|---|---|---|
| 100 | 6.1 | 5.2 | 4.5 | 4.0 | 3.6 | 3.3 | 3.0 | 4000 |
| 97 | 5.9 | 5.0 | 4.4 | 3.9 | 3.5 | 3.2 | 2.9 | 3867 |
| 93 | 5.7 | 4.8 | 4.2 | 3.8 | 3.4 | 3.1 | 2.8 | 3733 |
| 90 | 5.5 | 4.7 | 4.1 | 3.6 | 3.3 | 3.0 | 2.7 | 3600 |
| 87 | 5.3 | 4.5 | 3.9 | 3.5 | 3.2 | 2.9 | 2.6 | 3467 |
| 83 | 5.1 | 4.3 | 3.8 | 3.4 | 3.0 | 2.8 | 2.5 | 3333 |
| 80 | 4.8 | 4.2 | 3.6 | 3.2 | 2.9 | 2.6 | 2.4 | 3200 |
| | 600 | 700 | 800 | 900 | 1000 | 1100 | 1200 | |
| | Laser speed [mm/s] | | | | | | | |

Table 7: Powder 2-3 - Variable parameters of test setup, resulting average laser energy density and laser power of pulse

| Rel. laser power, 100% := 12 W [%] | Average laser energy density [J/mm³] | | | | | | | Power of pulse [W] |
|---|---|---|---|---|---|---|---|---|
| 100 | 52 | 45 | 40 | 36 | 33 | 30 | 28 | 4000 |
| 95 | 49 | 43 | 38 | 35 | 31 | 29 | 27 | 3800 |
| 90 | 47 | 41 | 36 | 33 | 30 | 27 | 25 | 3600 |
| 85 | 44 | 39 | 34 | 31 | 28 | 26 | 24 | 3400 |
| 80 | 42 | 36 | 32 | 29 | 26 | 24 | 22 | 3200 |
| 75 | 39 | 34 | 30 | 27 | 25 | 23 | 21 | 3000 |
| 70 | 36 | 32 | 28 | 25 | 23 | 21 | 20 | 2800 |
| | 70 | 80 | 90 | 100 | 110 | 120 | 130 | |

(continued)

| Rel. laser power, 100% := 12 W [%] | Average laser energy density [J/mm$^3$] | | | | | | | | | Power of pulse [W] |
|---|---|---|---|---|---|---|---|---|---|---|
| | Laser speed [mm/s] | | | | | | | | | |

Table 8: Powder 3-1 - Variable parameters of test setup, resulting average laser energy density and laser power of pulse

| Rel. laser power, 100% := 12 W [%] | Average laser energy density [J/mm$^3$] | | | | | | | | | Power of pulse [W] |
|---|---|---|---|---|---|---|---|---|---|---|
| 100 | 9.1 | 7.7 | 6.6 | 5.8 | 5.2 | 4.7 | 4.3 | 3.9 | 3.6 | 4000 |
| 97.5 | 8.9 | 7.5 | 6.4 | 5.7 | 5.1 | 4.6 | 4.2 | 3.8 | 3.5 | 3900 |
| 95 | 8.6 | 7.3 | 6.3 | 5.5 | 4.9 | 4.5 | 4.1 | 3.7 | 3.5 | 3800 |
| 92.5 | 8.4 | 7.1 | 6.1 | 5.4 | 4.8 | 4.3 | 4.0 | 3.6 | 3.4 | 3700 |
| 90 | 8.2 | 6.9 | 6.0 | 5.2 | 4.7 | 4.2 | 3.9 | 3.5 | 3.3 | 3600 |
| 87.5 | 8.0 | 6.7 | 5.8 | 5.1 | 4.5 | 4.1 | 3.7 | 3.4 | 3.2 | 3500 |
| 85 | 7.7 | 6.5 | 5.6 | 4.9 | 4.4 | 4.0 | 3.6 | 3.3 | 3.1 | 3400 |
| 82.5 | 7.5 | 6.3 | 5.5 | 4.8 | 4.3 | 3.9 | 3.5 | 3.2 | 3.0 | 3300 |
| 80 | 7.3 | 6.1 | 5.3 | 4.7 | 4.2 | 3.8 | 3.4 | 3.1 | 2.9 | 3200 |
| | 400 | 475 | 550 | 625 | 700 | 775 | 850 | 925 | 1000 | |
| | Laser speed [mm/s] | | | | | | | | | |

Table 9: Powder 3-2 - Variable parameters of test setup, resulting average laser energy density and laser power of pulse

| Rel. laser power, 100% := 12 W [%] | Average laser energy density [J/mm$^3$] | | | | | | | | | Power of pulse [W] |
|---|---|---|---|---|---|---|---|---|---|---|
| 100 | 60.6 | 39.3 | 29.1 | 23.1 | 19.1 | 16.3 | 14.3 | 12.6 | 11.4 | 4000 |
| 95 | 57.6 | 37.3 | 27.6 | 21.9 | 18.2 | 15.5 | 13.5 | 12.0 | 10.8 | 3800 |
| 90 | 54.5 | 35.4 | 26.2 | 20.8 | 17.2 | 14.7 | 12.8 | 11.4 | 10.2 | 3600 |
| 85 | 51.5 | 33.4 | 24.7 | 19.6 | 16.3 | 13.9 | 12.1 | 10.8 | 9.7 | 3400 |
| 80 | 48.5 | 31.4 | 23.3 | 18.5 | 15.3 | 13.1 | 11.4 | 10.1 | 9.1 | 3200 |
| 75 | 45.5 | 29.5 | 21.8 | 17.3 | 14.4 | 12.3 | 10.7 | 9.5 | 8.5 | 3000 |
| 70 | 42.4 | 27.5 | 20.4 | 16.2 | 13.4 | 11.4 | 10.0 | 8.9 | 8.0 | 2800 |
| 65 | 39.4 | 25.6 | 18.9 | 15.0 | 12.4 | 10.6 | 9.3 | 8.2 | 7.4 | 2600 |
| 60 | 36.4 | 23.6 | 17.5 | 13.9 | 11.5 | 9.8 | 8.6 | 7.6 | 6.8 | 2400 |
| | 60 | 93 | 125 | 158 | 190 | 223 | 255 | 289 | 320 | |
| | Laser speed [mm/s] | | | | | | | | | |

The process settings were applied by shaping either a 7 x 7- or a 9 x 9-matrix pattern of equally sized square fields. The overall size of the matrix patterns was 25 mm x 25 mm and 30 mm x 30 mm, respectively. Each square of the matrix pattern was shaped by applying the settings described in Table for each pair out of laser speed and laser power, respectively.

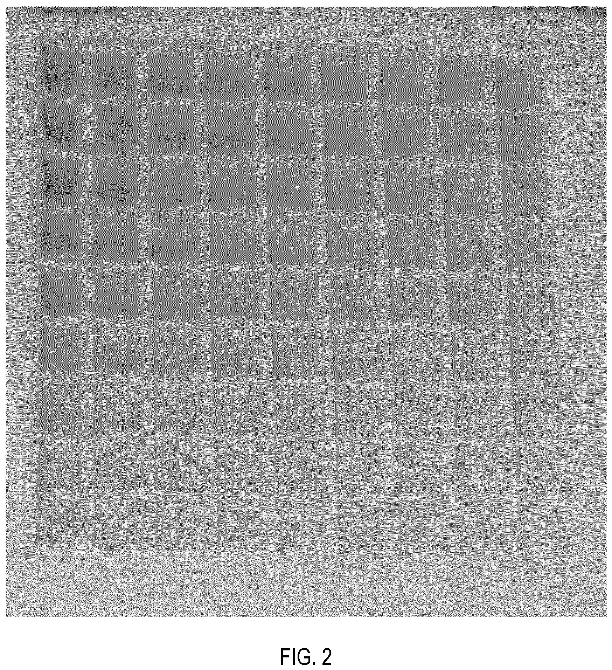

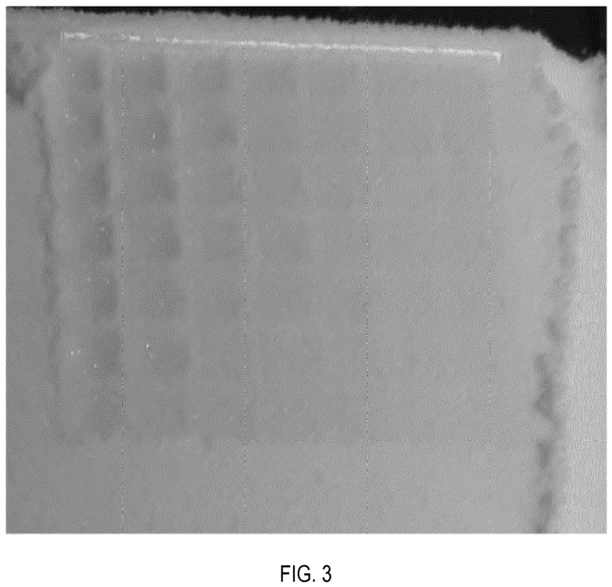

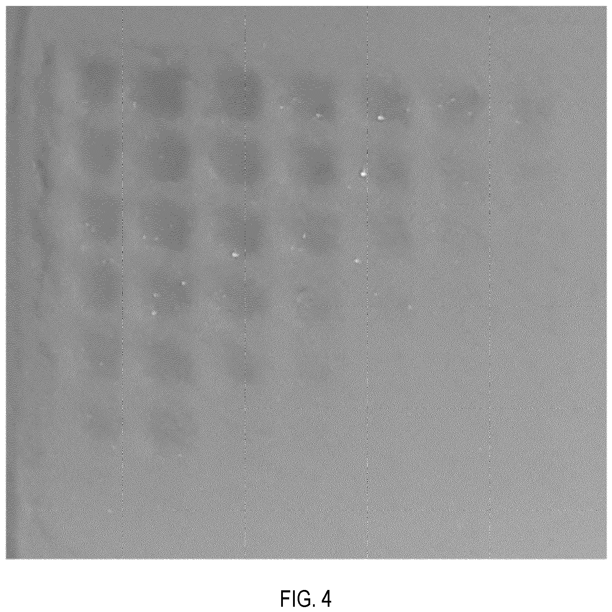

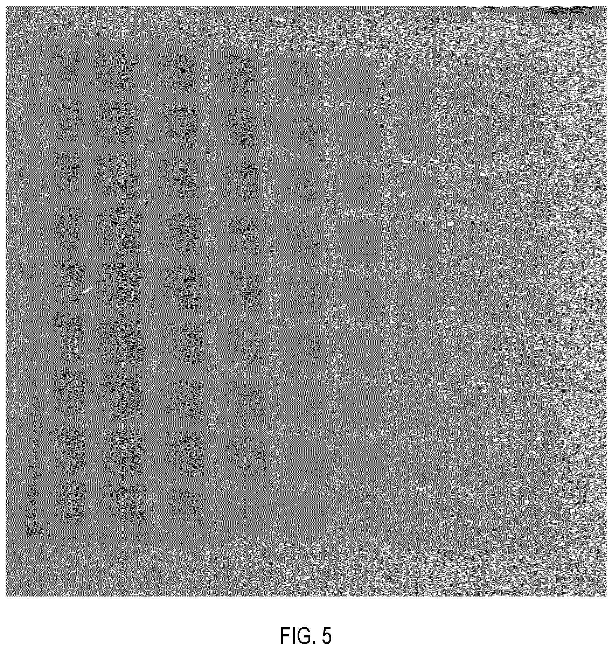

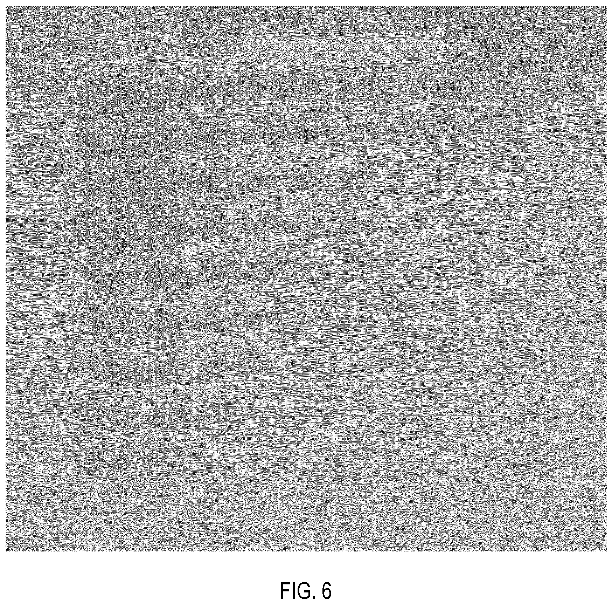

Results of the experiment with all evaluated powders are depicted in FIG. 2 to 6 with FIG. 2 relating to powder 2-1, FIG. 3 to powder 2-2, FIG. 4 to powder 2-3, FIG. 5 to powder 3-1 and FIG. 6 to powder 3-2.

From the experiments, the resulting sintered specimens are correlated to each laser intensity being derived from the laser power $E_L$, the scanning speed $v_s$ of the laser beam, the hatch distance $h_s$, and the effective layer thickness $d_L$ by applying following equation:

$$E_L = \frac{P_L}{v_s h_s d_L}$$

Effective layer thickness $d_L$ was assumed to be 110 $\mu$m since this is a typical value for powder bed-based 3D-printig processes.

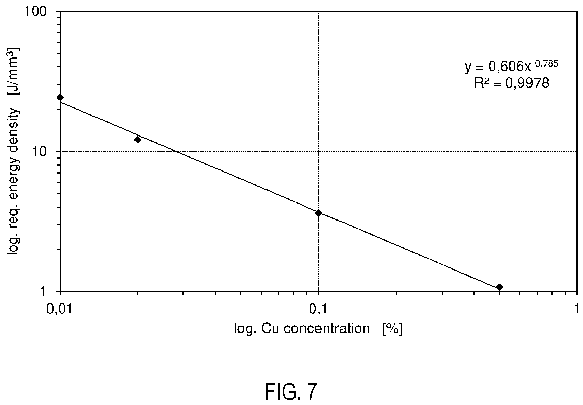

Based on the results of the previously described investigations, the relationship between the minimum required laser energy density and absorber concentration in TPUs 2-1, 2-2, 2-3, 3-1 and 3-2 can be identified as depicted in FIG. 7. The values for 2-2 and 3-1 are virtually identical and their data points lie on top of each other; this was to be expected as the copper concentration is the same. With the double-logarithmic axes of FIG. 7 a linear relationship between the copper concentration (x-axis) in the polymers and the minimum required laser energy density (y-axis) can be seen. The function equation is $y = 0.606x^{-0.785}$.

## Claims

1. A thermoplastic polyurethane comprising a copper compound,
   **characterized in that**
   copper is present in the polyurethane in an amount of $\geq$ 10 ppm to $\leq$ 1500 ppm, based on the total weight of the polyurethane,
   the polyurethane is free from antimony and
   the polyurethane is free from bismuth, with the exception of bismuth originating from bismuth carboxylates.

2. The polyurethane according to claim 1, wherein the copper is present in an amount of $\geq$ 40 ppm to $\leq$ 500 ppm.

3. The polyurethane according to claim 1 or 2, wherein the copper is present as copper(II) hydroxide phosphate.

4. The polyurethane according to any one of the preceding claims, wherein the polyurethane is in the form of a powder having an average powder size ($d_{50}$) of $\leq$ 200 $\mu$m or in the form of a filament having a diameter of $\leq$ 5 mm.

5. The polyurethane according to any one of the preceding claims, wherein the polyurethane is an aromatic polyesterpolyol-polyetherpolyol polyurethane, an aliphatic polyesterpolyol-polyetherpolyol polyurethane or an aromatic polyesterpolyol polyurethane.

6. An additive manufacturing process comprising fusing layers of a thermoplastic polymer build material by irradiating the polymer with a laser according to pre-determined crosssections of an article,
   **characterized in that**
   the laser emits a light with a wavelength of $\geq$ 1060 nm to $\leq$ 1070 nm and
   that in the polymer copper is present in the polymer in an amount of $\geq$ 10 ppm to $\leq$ 10000 ppm, based on the total weight of the polymer.

7. The process according to claim 6, wherein the polymer is a polyurethane.

8. The process according to claim 6 or 7, wherein the process is a selective laser powder sintering process or a fused deposition modeling process.

9. The process according to any one of claims 6 to 8, wherein the laser is operated at a power of $\leq$ 501 W.

10. The process according to any one of claims 6 to 9, wherein the energy density of the laser, expressed as J/mm$^3$, is $\geq$ 95% of the value calculated by the formula $0.606x^{-0.785}$ with x being the copper content in the polymer, expressed as weight-percentage based on the total weight of the polymer.

11. The process according to any one of claims 6 to 10, wherein the copper is present in the polymer in an amount of $\geq$ 40 ppm to $\leq$ 500 ppm.

**12.** The process according to any one of claims 6 to 11, wherein the copper is present in the polymer as copper(II) hydroxide phosphate.

**13.** The process according to any one of claims 7 to 12, wherein the polymer is an aromatic polyesterpolyol-polyetherpolyol polyurethane, an aliphatic polyesterpolyol-polyetherpolyol polyurethane or an aromatic polyesterpolyol polyurethane.

**14.** The process according to any one of claims 6 to 13, wherein the polymer is free from antimony and the polymer is free from bismuth, with the exception of bismuth originating from bismuth carboxylates.

**15.** Use of a thermoplastic polymer comprising a copper compound as a build material in an additive manufacturing process,
**characterized in that**
copper is present in the polymer in an amount of $\geq 10$ ppm to $\leq 10000$ ppm, based on the total weight of the polymer, the polymer is free from antimony and
the polymer is free from bismuth, with the exception of bismuth originating from bismuth carboxylates.

FIG. 1

FIG. 2

FIG. 3

FIG. 4

FIG. 5

FIG. 6

FIG. 7

Europäisches
Patentamt

European
Patent Office

Office européen
des brevets

# EUROPEAN SEARCH REPORT

Application Number

EP 21 18 4256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 706 897 A1 (ELASTOGRAN GMBH [DE]) 17 April 1996 (1996-04-17) | 1-3,5 | INV. C08G18/42 |
| A | * claims 1-5; examples 1,3,4 * ----- | 4,6-15 | B33Y10/00 C08G18/48 |
| A | EP 3 363 649 A1 (CLARIANT PLASTICS & COATINGS LTD [CH]) 22 August 2018 (2018-08-22) * paragraphs [0001] - [0003]; claims 1-9 * ----- | 1-15 | C08K3/22 C08L75/04 C08G18/22 B33Y70/10 B29C64/10 |
| A | US 2020/307076 A1 (ACHTEN DIRK [DE] ET AL) 1 October 2020 (2020-10-01) * claims 1-15 * ----- | 1-15 | C08K3/32 A01K11/00 C08K3/105 |
| A | US 2018/208706 A1 (GREEN JENNIFER [US] ET AL) 26 July 2018 (2018-07-26) * claims 1-25 * ----- | 1-15 | |

TECHNICAL FIELDS
SEARCHED      (IPC)

C08G
C08K
B33Y
C08L
B29C
A01K

The present search report has been drawn up for all claims

| Place of search | Date of completion of the search | Examiner |
|---|---|---|
| **Munich** | **22 December 2021** | **Scheuer, Sylvie** |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 18 4256

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2021

| Patent document cited in search report | | Publication date | Patent family member(s) | | Publication date |
|---|---|---|---|---|---|
| EP 0706897 | A1 | 17-04-1996 | DE | 4436897 A1 | 18-04-1996 |
| | | | EP | 0706897 A1 | 17-04-1996 |
| | | | US | 5630979 A | 20-05-1997 |
| EP 3363649 | A1 | 22-08-2018 | AR | 111056 A1 | 29-05-2019 |
| | | | AU | 2018222799 A1 | 01-08-2019 |
| | | | BR | 112019014947 A2 | 07-04-2020 |
| | | | CA | 3051067 A1 | 23-08-2018 |
| | | | CN | 110337463 A | 15-10-2019 |
| | | | EP | 3363649 A1 | 22-08-2018 |
| | | | EP | 3583163 A1 | 25-12-2019 |
| | | | JP | 2020508370 A | 19-03-2020 |
| | | | KR | 20190117020 A | 15-10-2019 |
| | | | RU | 2019129468 A | 22-03-2021 |
| | | | SG | 11201906568W A | 27-08-2019 |
| | | | TW | 201842073 A | 01-12-2018 |
| | | | US | 2021129570 A1 | 06-05-2021 |
| | | | WO | 2018150033 A1 | 23-08-2018 |
| | | | ZA | 201904574 B | 23-12-2020 |
| US 2020307076 | A1 | 01-10-2020 | CN | 111601716 A | 28-08-2020 |
| | | | EP | 3727861 A1 | 28-10-2020 |
| | | | US | 2020307076 A1 | 01-10-2020 |
| | | | WO | 2019121274 A1 | 27-06-2019 |
| US 2018208706 | A1 | 26-07-2018 | AU | 2016297508 A1 | 25-01-2018 |
| | | | BR | 112018000799 A2 | 04-09-2018 |
| | | | CA | 2992571 A1 | 26-01-2017 |
| | | | CN | 108026242 A | 11-05-2018 |
| | | | CR | 20180018 A | 08-03-2018 |
| | | | EP | 3325530 A1 | 30-05-2018 |
| | | | JP | 2018521768 A | 09-08-2018 |
| | | | KR | 20180029252 A | 20-03-2018 |
| | | | TW | 201707975 A | 01-03-2017 |
| | | | US | 2018208706 A1 | 26-07-2018 |
| | | | WO | 2017015072 A1 | 26-01-2017 |

EPO FORM P0459

For more details about this annex : see Official Journal of the European Patent Office, No. 12/82

**EP 4 116 350 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011083100 A1
- WO 2018150033 A1
- US 2008004363 A1
- US 5630979 A
- US 2017129177 A1
- WO 2015109141 A1